Europäisches Patentamt

European Patent Office

Office européen des brevets

(11) Veröffentlichungsnummer: **0 422 598 A2**

# EUROPÄISCHE PATENTANMELDUNG

(21) Anmeldenummer: 90119371.4

(51) Int. Cl.5: **H02G 1/12**

(22) Anmeldetag: 10.10.90

(30) Priorität: 12.10.89 DE 3934117
28.03.90 DE 4009870

(43) Veröffentlichungstag der Anmeldung:
**17.04.91 Patentblatt 91/16**

(84) Benannte Vertragsstaaten:
**AT BE CH DE ES FR GB IT LI NL SE**

(71) Anmelder: **Krampe, Josef**
**An der Vogelrute 32**
W-4715 Ascheberg-Herbern(DE)

(72) Erfinder: **Krampe, Josef**
**An der Vogelrute 32**
**W-4715 Ascheberg-Herbern(DE)**

(74) Vertreter: **Henfling, Fritz, Dipl.-Ing.**
**Beurhausstrasse 7**
**W-4600 Dortmund 1(DE)**

(54) **Abisolierzange.**

(57) Bei einer Abisolierzange für elektrische Leiter mit an den freien Enden der gegeneinander gegen Federkraft (17) verschwenkbaren Zangenschenkel (14, 16) angeordnete Einspannbacken (212, 221) und gegenüber den Einspannbacken (217, 221) nacheilend schließenden, sich in Schließposition von den geschlossenen Einspannbacken (217, 221) in Richtung des Leiterendes wegbewegenden Messern (232, 234), welche dabei die abgetrennte Isolierung abziehen, sind in Erfüllung der Vorgaben Einsetzbarkeit der Zange beim Abisolieren unter beengten Ver- hältnissen, etwa in Installationsdosen, Überschaubar- keit des Abisolierbereichs und Verwendbarkeit für verschiedene Leiterquerschnitte bei einem sich in der Zangenebene senkrecht zur Schwenkachse der Zangenschenkel (14, 16) vollziehenden Abziehhub (Pfeil B), die am freien Ende der Zangenschenkel (14, 16) vorgesehenen Einspannbacken (217, 221) sowie die Anschneid- und Abziehmesser (232, 234) aus dem Zangenmaul heraus verlagert.

FIG.1

EP 0 422 598 A2

# ABISOLIERZANGE

Die Erfindung betrifft eine Abisolierzange der im Oberbegriff des Anspruches 1 umrissenen Gattung. Solche Abisolierzangen sind beschrieben in den US-Patentschriften 2,313,793 und 2,523,936 sowie in der DE-Patentschrift 32 41 530.

Bei den vorbekannten Abisolierzangen nach den US-Patentschriften 2,313,793 und 2,523,936 sind dem einen Zangenschenkel die Einspannbakken zugeordnet, deren eine gegen die andere lagefixierte Einspannbacke anstellbar ist, und dem anderen Zangenschenkel die Anschneid- und Abziehmesser, deren eines gegen das andere lagefixierte Messer auch wieder anstellbar ist, wobei bei Betätigung der Zange voreilend gegen Federdruck die Anstellung der anstellbaren Einspannbacke erfolgt, worauf gegen den Druck derselben Feder die Anstellung des anstellbaren Anschneid- und Abziehmessers erfolgt, woran sich gegen den Druck einer weiteren Feder das Abheben des die Schneidmesser tragenden Zangenschenkels von dem die Einspannbacken tragenden Zangenschenkel anschließt, wodurch das Abstreifen der abgetrennten Isolierung von dem Überstand des Leiters über die Anschneid- und Abziehstation bewirkt. Ein wesentlicher Nachteil dieser bekannten Abisolierzangen, die sich, was ihre Funktion betrifft, durchaus bewährt haben, ist der konstruktive Aufwand, dessen es hierbei bedarf. Es erweist sich hierbei des weiteren als nachteilig, daß der abzuisolierende Leiter von der Seite her in die Abisolierposition zwischen den Einspannbacken sowie den Schneid- und Abziehmessern überführt werden muß, was insbesondere das Abisolieren unter beengten Verhältnissen, etwa das Abisolieren der Enden von bereits verlegten, in Installationsdosen mündenden Leitern beeinträchtigt. Bei der Abisolierzange nach der DE-Patentschrift 32 41 530 erfolgt das Abziehen der mit parallel zur Schwenkachse der Zangenschenkel verlaufenden Anschneid- und Abziehmessern abgetrennten Isolierung zwar schon von dem senkrecht zur Schwenkachse in das Zangenmaul eingeführten Leiter, der im Zangenmaul zur Verfügung stehende Abisolierbereich ist hierbei jedoch räumlich begrenzt, mit ein und derselben Zange läßt sich deshalb praktisch immer nur ein bestimmter Leiterquerschnitt abdecken. Darüber hinaus ist hierbei dann auch die lagerechte Positionierung des abzuisolierenden Leiterendes im Abisolierbereich der Zange nicht kontrollierbar.

Ausgehend vom im Vorausgehenden umrissenen Stand der Technik liegt der Erfindung die Aufgabe zugrunde, eine Lösung anzubieten, die die Vorteile der im vorausgehenden beschriebenen Zangenvarianten bei konstruktiv vergleichsweise geringem Aufwand in sich vereinigt.

Die Aufgabe wird mit einer solchen Abisolierzange gelöst, die erfindungsgemäß entsprechend dem kennzeichnenden Teil des Anspruchs 1 ausgestaltet ist.

Die Erfindung präsentiert eine Abisolierzange mit konstruktiv vergleichsweise geringem Aufwand, die dann auch das einwandfreie Abisolieren von Leitern unter beengten Verhältnissen zuläßt. Letzteres ist darin begründet, daß der abzuisolierende Leiter der Zange von ihrer Stirnseite her zugeführt wird, womit der weitere Vorteil der guten Orientierbarkeit des Leiters zwischen den Zangenschenkeln, speziell zwischen den Einspannbacken sowie den Anschneid- und Abziehmessern verbunden ist. Die außerhalb des Zangenmauls liegenden Einspann- sowie Anschneid-und Abisolierbereiche eröffnen weitergehend in vorteilhafter Weise eine größere Variationsbreite, was unterschiedliche, auf voneinander abweichende Leiterquerschnitte ausgelegte Abisolierbereiche betrifft.

Vorteilhafte Ausgestaltungen der Erfindung ergeben sich aus den Unteransprüchen und insbesondere dann auch aus der Zeichnungsbeschreibung.

In der Zeichnung ist die Erfindung anhand eines Ausführungsbeispieles weitergehend erläutert. Es zeigen:

Fig. 1 die neue Zange in Ausgangsstellung,

Fig. 2 die Zange nach Fig. 1 in Abmantelungsendstellung,

Fig. 3 die Zange nach den Fig. 1 und 2 in der ersten Phase des Rücklaufs in die Ausgangsstellung, ab- und aufgebrochen, in größerem Maßstab,

Fig. 4a ein Schnitt nach Linie IV-IV in Fig. 1 bzw. Fig. 3,

Fig. 4b einen der Fig. 4a entsprechenden Schnitt bei der Situation gemäß Fig. 2,

Fig. 5a einen Schnitt nach Linie V-V in Fig. 1 bzw. Fig. 3,

Fig. 5b einen der Fig. 5a entsprechenden Schnitt bei der Situation gemäß Fig. 2.

Fig. 6 eine erste Ausführungsform der neuen Abisolierzange in Ausgangsstellung,

Fig. 7 die Zange in Fig. 1 in Abmantelungsendstellung,

Fig. 8 einen Schnitt nach Linie III - III in Fig. 1,

Fig. 9 eine der Fig. 1 entsprechende Darstellung einer weiteren Ausführungsform der Abisolierzange.

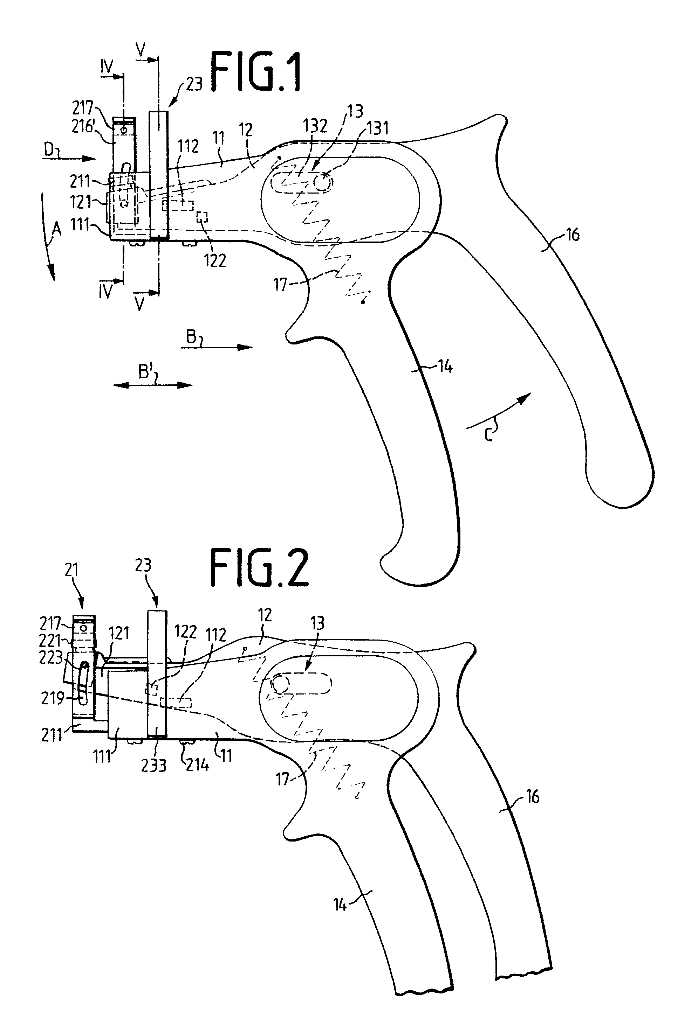

Die dargestellte Abisolierzange besteht aus einem Zangenkörper mit zwei scharnierend zusammengefaßten Zangenschenkeln 11, 12, die sich über den Verbindungsbereich 13 hinaus in Handgriffe 14, 16 fortsetzen. Verbunden ist der sich in dem ausgenommenen ersten Zangenschenkel 11 führende zweite Zangenschenkel 12 mit dem Zangenschenkel 11 durch einen zylindrischen, im Zangenschenkel 12 drehbeweglich gelagerte Bolzen 131, der sich in Langlöchern 132 in den zweiten Zangenschenkel 12 einfassenden Wangen des Zangenschenkels 11 geführt wird. Die Innenkonturen des Zangenschenkels 11 und damit in Wechselwirkung tretende Außenkonturen des Zangenschenkels 12 in Verbindung mit der Langlochführung 131, 132 bestimmten den Bewegungsverlauf des Zangenschenkels 11 gegenüber dem Zangenschenkel 12 im Sinne der Pfeilfolge A-B bei der Überführung der Zange aus der in Fig. 1 dargestellten Situation in die in Fig. 2 dargestellte Situation, also bei der Betätigung der Zange durch Anziehen des Handgriffs 14 gegen den Handgriff 16 im Sinne des Pfeiles C. In die Ausgangssituation, also die in Fig. 1 dargestellte Situation wird die Zange aus der in Fig. 2 dargestellten Situation bei Freigabe des Handgriffs 14 durch die einerseits am Zangenschenkel 12 und andererseits am Handgriff 14 angreifende Rückstellfeder 17 zurücküberführt.

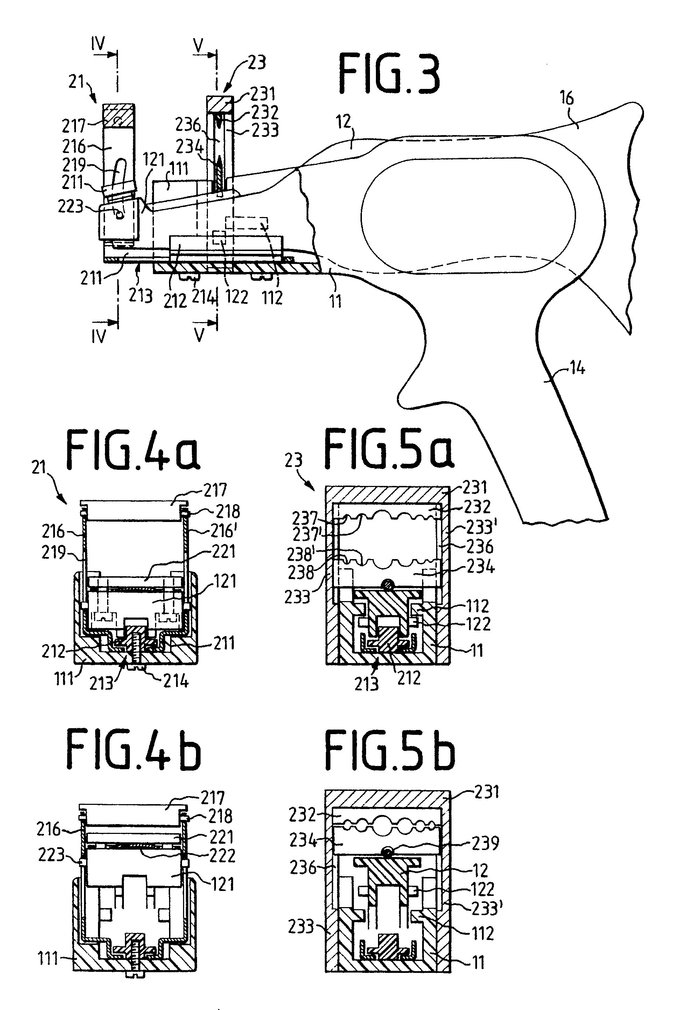

Dem Zangenschenkel 11 ist am freien Ende 111 ein den Zangenschenkel 12 übergreifender Bügel 21 zugeordnet, der auf einem sich in den Zangenschenkel 11 hinein erstreckenden Ausleger 211 angeordnet ist, auf dem ein Niederhalter 212 aufsitzt, der durch den Ausleger 211 in einem Langloch 213 durchdringende Schrauben 214 gegenüber dem Zangenschenkel 11 unter Erhaltung seiner Längsbeweglichkeit und damit der des Bügels 21 gegenüber dem Zangenschenkel 11 im Sinne des Doppelpfeiles B′ festgelegt ist (insbesondere Fig. 3 und 4). Den Steg des Bügels 21 bildet eine an seinen Schenkeln 216, 216′ pendelnd gelagerte (218) Einspannbacke 217. Das Gegenstück zu dieser Einspannbacke 217 bildet eine am freien, sich in Langlöchern 219 in den Schenkels 216, 216′ des Bügels führende (223) Ende 121 des Zangenschenkels 12 auf der vom Zangenschenkel 11 abgekehrten Seite federnd (222) gelagerte Einspannbacke 221.

Im Abstand von dem Einspannbereich (21), und zwar in Richtung auf den Verbindungsbereich 13 zurückverlagert, ist der Zange das Schneid- und Abziehwerkzeug zugeordnet, das aus einem von dem Steg 231 eines dem Zangenschenkel 11 zugeordneten Bügels 23 hinterfangenen Obermesser 232 besteht und einem sich in den Schenkeln 233, 233′ des Bügels 23 führenden (236), von dem Zangenschenkel 12 unterfangenen und durch diesen Schenkel überhebbaren Untermesser 234. Die Messer 232, 234 weisen korrespondierende Abisolierbereiche 237, 237′, ...238, 238′... auf, die auf unterschiedliche Abmessungen abzuisolierender Leiter ausgelegt sind. Eine Verbindung 239 zwischen Untermesser 234 und Zangenschenkel 12 stellt den Rücklauf des Untermessers 234 in seine Ausgangslage sicher.

Zum Abisolieren wird das abzuisolierende Ende des jeweiligen Leiters im Sinne des Pfeiles D von der Stirnseite der Zange her zunächst zwischen den in Offenstellung befindlichen Einspannbacken 217, 221 hindurch und weitergehend dann auch noch zwischen den dahinter liegenden, in Offenstellung befindlichen Schneidmessern 232, 234 des Anschneid- und Abziehbereichs (23) hindurch bis zu einem dem abzuisolierenden Bereich des Leiters entsprechenden Überstand des Leiters über die Anschneid- und Abziehmesser 232, 234 hindurch geschoben, und zwar unter Positionierung des Leiters in dem Abisolierbereich, z.B. 238′, des Untermessers 234, der dem jeweiligen Leiterquerschnitt bzw. der Stärke der Isolierung des Leiters entspricht. Sodann werden die Handgriffe 14, 16 der Zangenschenkel 11, 12 zusammengedrückt, was auf ein Verschwenken des Handgriffs 14 gegen den Handgriff 16 hinausläuft (Pfeil C in Fig. 1). Dabei erfolgt beeinflußt durch die Langlochführung 132 für den Verbindungsbolzen 131 und die Rückstellfeder 17 zunächst ein Verschwenken des Zangenschenkels 11 im Sinne des Pfeiles A und damit einhergehend, den Leiter festlegendes Auflaufen der oberen Einspannbacke 217 gegen den auf der unteren Einspannbacke 221 aufliegenden Leiter. Einher geht damit dann auch schon die Überführung des Untermessers 234 des Anschneid-und Abziehbereichs (23) durch den das Untermesser 234 unterfangenden Zangenschenkel 11 in Anschneidposition, in der Ober- und Untermesser 232, 234 die Isolierng des Leiters anschneiden. An die Schwenkbewegung des Zangenschenkels 11 im Sinne des Pfeiles A schließt sich bei weiterem Zusammendrücken der Handgriffe 14, 16 sodann eine in der Flucht des Zangenschenkels 11 verlaufende Verlagerung des Zangenschenkels 11 im Sinne des Pfeiles B an. Dabei wird die abgetrennte Isolierung von den sie hinterfangenden Messern 232, 234 von dem Überstand des Leiters über die Messer 232, 234 abgezogen. Bei wieder geöffneter Zange wird der Leiter mit dem abisolierten Ende sodann aus der Zange entnommen.

Eine Sperre ingestalt von seitlich aus dem Zangenschenkel 12 vorspringenden Nasen 122 und damit korrespondierenden, in Ausgestaltung (Fig. 1) unterhalb des Niveau der Nasen 122 liegenden, seitlich aus dem Zangenschenkel 11 vorspringenden Nasen 112 stellt sicher, daß bei Betätigung der Zange auf jeden Fall zunächst ein vollständiges Verschwenken des Zangenschenkels 11 im Sinne des Pfeiles A und somit die Klemmung des Leiters im inspannbereich (21) erfolgt, ehe es zur Verlagerung des Zangeschenkels 11 gegenüber dem Zangenschenkel 12 im Sinne des Pfeiles B kommt, bei der die Nase 112 die Nase 122 unterfährt. Gleichermaßen stellt die Sperre sicher, daß der Rücklauf des Zangenschenkels 11 in seiner Ausgangslage erst erfolgt, wenn der Zangenschenkel 11 gegen den Zangenschenkel 12 zurückverschwenkt ist, die Nase 122 am Zangenschenkel 12 unterfährt dann die Nase 112 am Zangenschenkel 11.

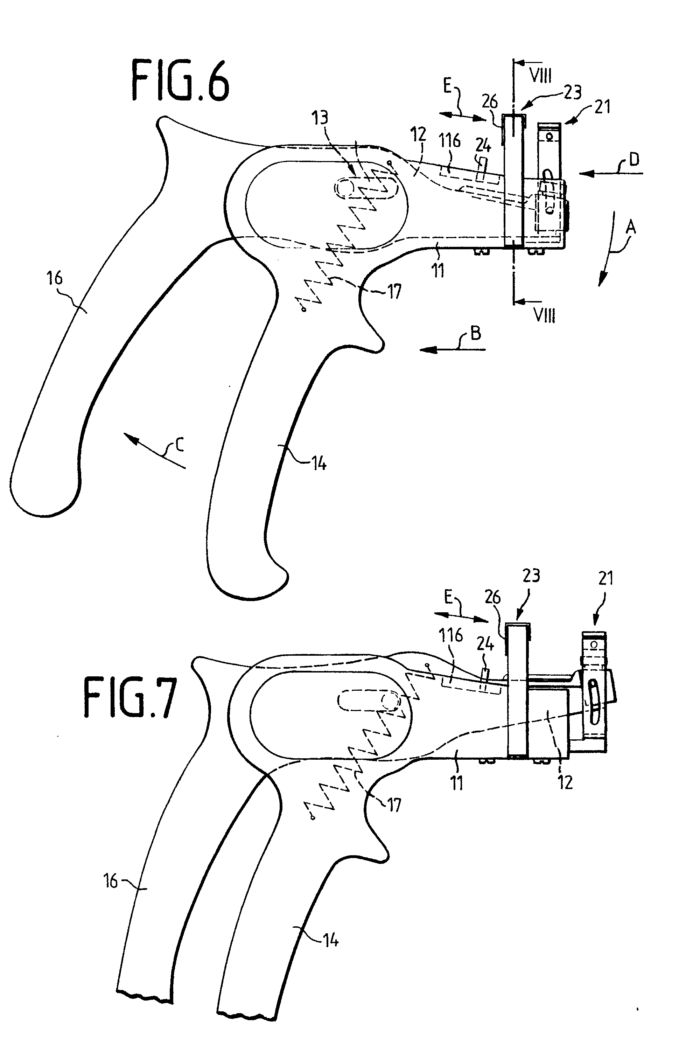

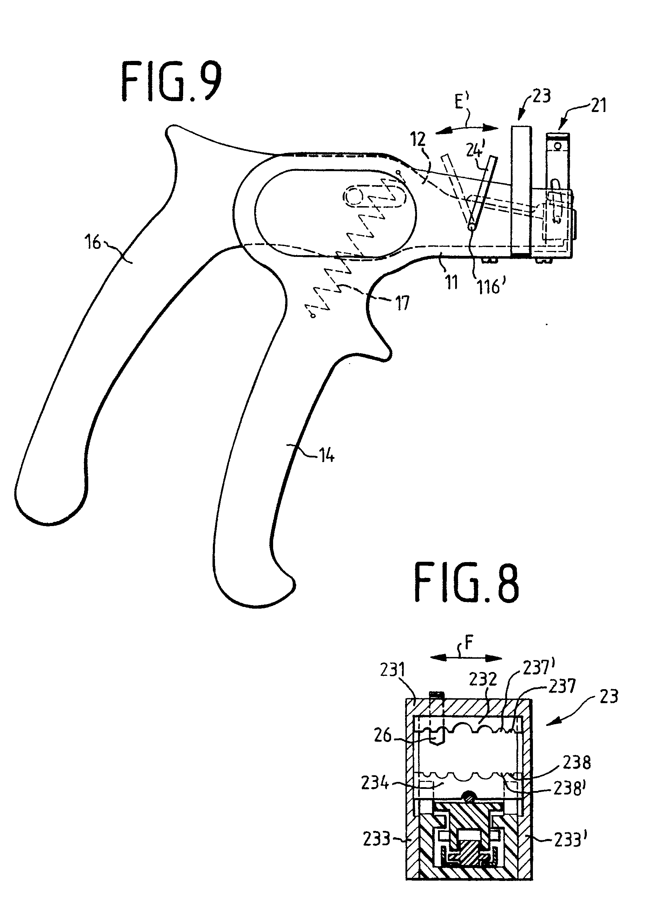

Die Länge des von der Isolierung zu befreienden Endbereichs des Leiters wird vorgegeben durch einen sich am Schenkel 11 im Sinne des Doppelpfeiles E verlagerbar führenden, den Schenkel querenden Anschlag 24, gegen den das aus der Anschneid- und Abziehstation 23 austretende Leiterende aufläuft. Nach den Fig. 6 und 7 führt sich der Anschlag 24 in Langlöchern 116, nach Fig. 9 ist der Anschlag 24' im Sinne des Pfeiles E' verschnwekbar am Zangenschenkel 11 gelagert (116').

Sind die Bestandteil der Anschneid- und Abziehstation 23 bildenden Messer mit auf unterschiedliche Leiterquerschnitte ausgelegten Anschneidbereichen 237, 237'..., 238, 238 ... versehen, dient ein längs des Steges 231 des Bestandteil der Anschneid- und Abziehstation 23 bildenden Bügels 233, 231, 233' im Sinne des Doppelpfeiles F verlagerbarer Zeiger 26 als Orientierungshilfe (insbes. Fig. 8).

## Ansprüche

1. Abisolierzange für elektrische Leiter mit an den freien Enden der gegeneinander gegen Federkraft verschwenkbaren Zangenschenkel angeordneten Einspannbacken und gegenüber den Einspannbacken nacheilend schließenden sich in Schließposition von den geschlossenen Einspannbacken in Richtung des Leiterendes wegbewegenden Messern, welche dabei die abgetrennte Isolierung abziehen, dadurch gekennzeichnet, daß am freien Ende (121) des in einer Langlochführung (132) im ersten Zangenschenkel (11) gegen diesen verschwenkbar und darauffolgend in seiner Flucht verlagerbar geführten zweiten Zangenschenkels (12) auf der vom ersten Zangenschenkel (11) abgekehrten Seite eine Einspannbacke (221) angeordnet ist, mit der eine den Steg eines vom ersten Zangenschenkel (11) ausgehenden, den zweiten Zangenschenkel (12) übergreifenden gegenüber dem ersten Zangenschenkel (11) verlagerbaren Bügels (21) bildende Einspannbacke (217) zusammenwirkt und im Abstand von den Einspannbacken (217, 221) vom ersten Zangenschenkel (11) ein den zweiten Zangenschenkel (12) übergreifender Bügel (23) lagefixiert ausgeht, dessen Steg (231) das obere Anschneid- und Abziehmesser (232) hinterfängt, mit dem ein unteres, vom zweiten Zangenschenkel (12) unterfangenes Anschneid- und Abziehmesser (234) zusammenwirkt.

2. Abisolierzange nach Anspruch 1, dadurch gekennzeichnet, daß der Bestandteil des Einpannbereichs bildende Bügel (21) auf einem sich zwangsgeführt in den ersten Zangenschenkel (11) hinein erstreckenden in der Flucht des Zangenschenkels (11) verlagerbaren Ausleger (211) angeordnet ist, und die auf dem zweiten Zangenschenkel (12) aufsitzende Einspannbacke (221) in Langlöchern (219) in den Schenkeln (216, 216') des Bügels (21) geführt ist.

3. Abisolierzange nach Anspruch 2, gekennzeichnet durch einen kurvenförmigen Verlauf der Langlöcher (219) in den Bügelschenkeln (216, 216').

4. Abisolierzange nach einem der Ansprüche 1 bis 3, dadurch gekennzeichnet, daß mindestens eine der Einspannbacken (217, 221) pendelnd gelagert ist.

5. Abisolierzange nach einem der Ansprüche 1 bis 4, dadurch gekennzeichnet, daß mindestens eine der Einspannbacken (217, 221) federnd gelagert ist.

6. Abisolierzange nach einem der Ansprüche 1 bis 5, dadurch gekennzeichnet, daß das mit dem zweiten Zangenschenkel (12) überhebbare Untermesser (234) der Anschneid- und Abziehstation mit dem zweiten Zangenschenkel (12) verbunden ist.

7. Abisolierzange nach einem der Ansprüche 1 bis 6, gekennzeichnet durch ein sich in den Schenkeln (233, 233') des vom ersten Zangenschenkel (11) ausgehenden Bügels (23) der Anschneid- und Abziehstation führendes Untermesser.

8. Abisolierzange nach einem der Ansprüche 1 bis 7, gekennzeichnet durch Messer (232, 234) mit einer Mehrzahl von auf unterschiedliche Leiterquerschnitte ausgelegten Abisolierbereichen (237, 237'..., 238, 238'...).

9. Abisolierzange nach einem der Ansprüche 1 bis 8, dadurch gekennzeichnet, daß die Klemmbacken mit einer Mehrzahl von auf unterschiedliche Leiterquerschnitte ausgelegten Klemmbereichen versehen sind.

10. Abisolierzange nach einem der Ansprüche 1 bis 7, gekennzeichnet durch Messer mit einem auf eine Stegleitung ausgelegten Abisolierbereich.

11. Abisolierzange nach einem der Ansprüche 1 bis 10, gekennzeichnet durch auswechselbare Messer und Einspannbacken.

12. Abisolierzange nach einem der Ansprüche 1 bis 11, gekennzeichnet durch einen drehbeweglich in dem zweiten Zangenschenkel gelagerten Bolzen, dessen Überstände sich in Langlöchern im den zweiten Zangenschenkel einfassenden ersten Zangenschenkel führen.

13. Abisolierzange nach einem der Ansprüche 1 bis 12, dadurch gekennzeichnet, daß die Stege der Bügel von der oberen Einspannbacke bzw. von dem Obermesser der Anschneid- und Abziehstation gebildet werden.

14. Abisolierzange nach einem der Ansprüche 1 bis 13, gekennzeichnet durch einen einstellbaren Hub der Abisolierzange.

15. Abisolierzange nach einem der Ansprüche 1 bis 14, dadurch gekennzeichnet, daß am ersten Zangenschenkel (11) ein den Zangenschenkel (11) querender Anschlag (24, 24') mit einstellbarem Abstand zur Anschneid-und Abziehstation (23) gelagert ist.

16. Abisolierzange nach einem der Ansprüche 1 bis 15, gekennzeichnet durch einen sich in Langlochführungen (116) im Zangenschenkel (11) selbsthemmend führenden Anschlag (24).

17. Abisolierzange nach einem der Ansprüche 1 bis 15, gekennzeichnet durch einen um eine quer zum Zangenschenkel (11) verlaufende Achse (116') verschwenkbar am Zangenschenkel (11) selbsthemmend gelagerten Anschlag (24').

18. Abisolierzange nach einem der Ansprüche 15 bis 17, gekennzeichnet durch aufhebbare Rasteingriffe zwischen dem Zangenschenkel (11) und dem Anschlag (24 bzw. 24').

19. Abisolierzange nach einem der Ansprüche 8 bis 18, gekennzeichnet durch einen auf dem Steg (231) des Bestandteil der Anschneid- und Abziehstation bildenden Bügels (23) aufsitzenden, längs des Steges (231) verschiebbar gelagerten Zeiger (26) zur Markierung eines bestimmten Abisolierbereichs.

FIG.1

FIG.2

# FIG.3

# FIG.4a

# FIG.5a

# FIG.4 b

# FIG.5 b

# FIG.6

# FIG.7

8

# FIG.9

# FIG.8